# EUROPEAN PATENT SPECIFICATION

(11) **EP 0 422 405 B1**
(45) Date of publication and mention of the grant of the patent: **14.12.1994**
(21) Application number: 90117664.4
(22) Date of filing: 13.09.1990
(51) Int. Cl.: B60Q 1/04

(54) **Vehicle bodywork component incorporating a lighting device**
Kraftfahrzeugskarosseriekomponente, umfassend eine Beleuchtungsvorrichtung
Pièce de carrosserie automobile contenant un dispositif d'éclairage

(30) Priority: 13.10.1989 IT 5341489 U
(43) Date of publication of application: 17.04.1991
(73) Proprietor: IVECO FIAT S.p.A., 10156 Torino (IT)
(72) Inventor: Gaiotto, Giovanni, I-10040 Borgaretto (IT)
(74) Representative: Prato, Roberto

(56) References cited:
- DE-A- 2 030 144
- DE-C- 401 786
- DE-C- 506 415

## Description

The present invention relates to a vehicle bodywork component incorporating a lighting device.

The present invention relates in particular, but not exclusively, to a bumper of an industrial vehicle incorporating a headlamp.

It is known that headlamps are normally inserted in a recess formed in the vehicle body or in the bumpers of the vehicle. In order to improve the operations for maintaining the headlamp have been built devices in which the assembly and dismantling of a lighting device can be readily carried out.

For instance patent DE-A-3402274 shows a bodywork component comprising a head lamp housed in a recess of the bodywork and a hinge interposed between the bodywork component and one side of the headlamp. The hinge is adapted to allow the headlamp to rotate between a first position in which the headlamp is housed in the recess and a second position in which the headlamp is extracted from the recess.

The headlamp and the recess are provided with means for positioning the headlamp in the recess and for securing the headlamp in the recess.

The known positioning and securing means are affected by the vibrations of the bodywork and do not allow an accurate relative relative positioning of the headlamp in the recess.

The present invention provides a vehicle bodywork component of the type comprising a recess housing a lighting device and means for fastening this lighting device in the recess, said fastening means comprise at least one hinge interposed between the bodywork component and one end of the lighting device; the hinge is adapted to allow the lighting device to rotate between a first position in which it is housed in the recess and a second position in which it is extracted from the recess; said lighting device having first connection and securing means adapted to be coupled to second connection and securing means borne by the bodywork component at an end opposite to the end connected to the hinge; characterized in that the first connection and securing means comprise two hollow bodies provided in an outer wall of the lighting device and in that the second means comprise two projections extending from an inner wall of the recess and adapted to engage with the respective hollow bodies to define an accurate relative positioning of the lighting device with respect to the bodywork component; the first connection and securing means further comprise at least one threaded portion supported by the lighting device and in that the second connection and securing means comprise at least one screw which forms a connection with the threaded portion.

The invention will be described below with reference to the attached drawings, which show a non-limiting embodiment thereof, in which:
Fig. 1 is a perspective view of a preferred embodiment of a bodywork component of the present invention;
Fig. 2 is a section on an elarged scale along the line II-II of Fig. 1;
Fig. 3 is a section on an enlarged scale along the line III-III of Fig. 1 showing an operating condition not illustrated in Fig. 1;
Fig. 4 is a section through a variant of a detail shown in Fig. 3.

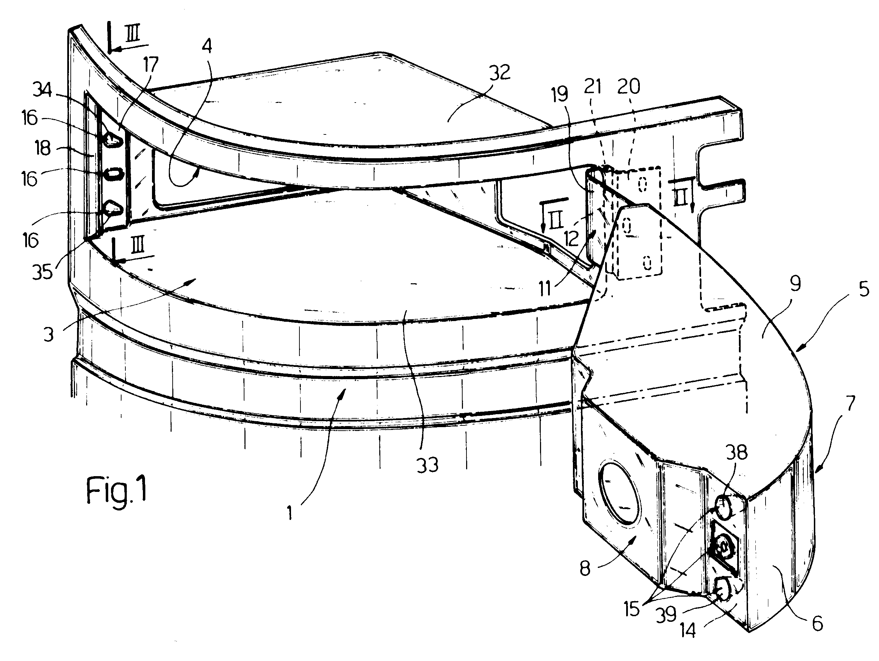

In Fig. 1 a vehicle bodywork component, in particular a bumper, is designated overall by 1 and has a recess 3, communicating externally via a hole 4, adapted to house a headlamp 5.

The headlamp 5 is bounded laterally by a vertical curved wall 6 from which a transparent member 7 extends at the front; the wall 6 is connected to a base wall 8 and two plane upper 9 and lower walls (only one of which is shown in the Figure) perpendicular to the walls 6 and 8.

The headlamp 5 also has a shape such that it can be completely contained in the recess 3 and is rigid, at one lateral end, with a vertical hinge 11 which is secured to the bumper 1 in the vicinity of a vertical edge 12 of the hole 4.

At one of its ends 14 and on the side opposite to the hinge 11 the wall 8 has means 15 for connecting and securing the headlamp 5 to the bumper 1. These means 15 are adapted to be connected to respective connection and securing means 16 borne by a peripheral wall 17 of the recess 3 and are disposed in the vicinity of a vertical edge 18 of the hole 4.

The structure of the means 15 and 16 is described in detail below.

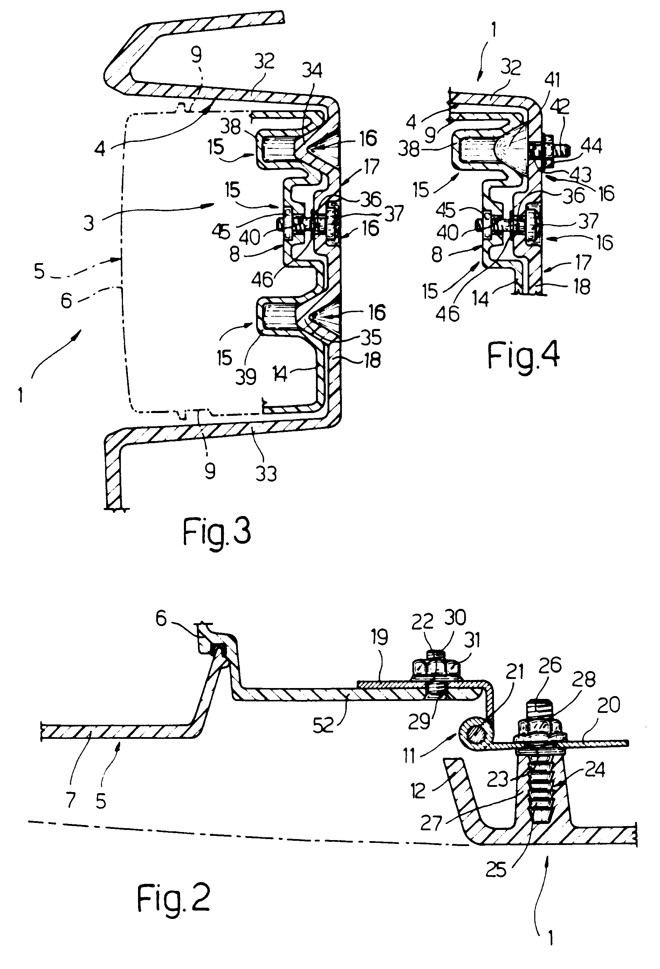

In Fig. 2 the hinge 11 comprises two plates 19 and 20 which are hinged together about a pin 21. The plate 19 has a through hole 22 for connection with a projection 52 extending in a detachable manner from the wall 6 of the headlamp 1; the plate 20 has a through hole 23 for connection to the bumper 1.

The connection of the plate 19 to the projection 52 takes place via a screw 30, passing through the hole 22 and a through hole 29 in the projection 52 itself, and a locking nut 31.

The connection of the plate 20 to the bumper 1 takes place via a pin 24 with a toothed portion 25 and a threaded head 26. The portion 25 is fitted in a blind hole formed in a projection 27 emerging internally from the bumper 1, while the threaded head 26 engages with the through hole 23 of the plate 20 and is made rigid with the latter by a locking nut 28.

In Fig. 3 the headlamp 5 is shown in a different position to that of the headlamp 5 in Fig. 1; the headlamp 5 is in particular shown completely inserted in the recess 3 and is shown partly in section and partly in dashed lines.

Fig. 3 clearly shows the recess 3 in the bumper 1 which is bounded by the peripheral wall 17 and by an upper wall 32 and a lower wall 33 both substantially perpendicular to the wall 17 and formed in one piece with the wall 17.

Two projections 34 and 35 of frustoconical shape which are substantially identical and are obtained in one piece with the wall 17 extend from the wall 17 towards the interior of the recess 3. The wall 17 is provided with a through hole 36 which is located between the projections 34 and 35 and is substantially aligned with these projections 34 and 35. A screw 37 whose shank has a radial annular groove engaged by an elastic segment 46 which engages with the wall 17 thereby preventing the screw 37 from moving axially with respect to the hole 36 is inserted in the hole 36.

The projections 34, 35 and the screw 37 form the connection and securing means 16 borne by the bumper 1.

Two cup-shaped members 38 and 39 with a substantially frustoconical mouth are provided in the wall 14 of the headlamp 5, which members define respective housings for the projections 34 and 35. The wall 14 also has a through hole 40 which is substantially aligned with the members 38 and 39 and is coaxial with the hole 36 in the wall 17 of the bumper 1. The hole 40 houses a nut 45 which is adapted to engage in use with the screw 37 so as to form a permanent connection between the bumper 1 and the headlamp 5.

The cup-shaped members 38, 39 and the nut 45 form the connection and securing means 15 borne by the headlamp 5.

Fig. 4 shows an equivalent solution in respect of the securing means 15 described above; since none of the other details have been changed, the same reference numerals have been used to identify details described above with reference to Fig. 3 which are identical. In particular, the projection 34 is in this case replaced by a substantially conical boss 41 with a rounded vertex made from an elastically deformable material. The boss 41 is stamped together with the threaded shank 42 which engages with a through hole 43 in the wall 17. The shank 43 is screwed to a nut 44 which, by pressing on the wall 17 of the bumper 1, provides the connection between the boss 41 and the wall 17.

In use, the headlamp 5 is completely inserted within the recess 3 and is secured to the bumper 1 by the hinge 11 and by the connection of the means 15 and 16.

With particular reference to Fig. 3, the screw 37 engages with the nut 45 and permanently connects the bumper 1 to the headlamp 5. In this way the headlamp 5 cannot rotate about the hinge 11 and is permanently inserted in the recess 3.

When it is necessary to remove the headlamp 1 from the recess 3 (in order, for instance, to replace the light source) it is simply necessary to unscrew the screw 37 which rotates within the hole 36 without moving axially with respect to this hole 36 since it is secured by the elastic segment 46.

In this way the screw 36 rotates within the nut 45 and urges the wall 8 of the headlamp towards the exterior of the recess 3, causing the headlamp 5 to rotate about the hinge 11.

In this way, when the screw 37 has emerged fully from the nut 45, the headlamp 5 is partly outside the recess 3; the operator then completes the removal of the headlamp 5 by rotating the headlamp 5 manually about the hinge 11 until the headlamp 5 is completely extracted from the recess 3.

In order to assemble the headlamp 1 in the recess 3 of the bumper 1 the operations described above are reversed.

As mentioned above, it is evident that the assembly and/or dismantling operations for the headlamp are much simpler than the equivalent operations carried out at present.

It is also evident that modifications and variants can be made to the component 1 described above without departing from the scope of the invention.

The means for connecting the headlamp (hinge and connecting and securing means) could in particular be advantageously used to secure the headlamp to bodywork components in general and the headlamp could also be replaced by any similar lighting device, for instance an optical indicator unit.

## Claims

1. A vehicle bodywork component of the type comprising a recess housing a lighting device and means for fastening this lighting device in the recess, said fastening means comprise at least one hinge (11) interposed between the bodywork component (1) and one end (10) of the lighting device (5); the hinge (11) is adapted to allow the lighting device (5) to rotate between a first position in which it is housed in the recess (3) and a second position in which it is extracted from the recess (3); said lighting device (5) having first connection and securing means (15) adapted to be coupled to second connection and securing means (16) borne by the bodywork component (1) at an end (17) opposite to the end (10) connected to the hinge (11); characterized in that the first connection and securing means (15) comprise two hollow bodies (38,39) provided in an outer wall (14) of the lighting device (5) and in that the second means (16) comprise two projections (34,35;41) extending from an inner wall (17) of the recess (3) and adapted to engage with the respective hollow bodies (38,39) to define an accurate relative positioning of the lighting device (5) with respect to the bodywork component (1); the first connection and securing means (15) further comprise at least one threaded portion (45) supported by the lighting device (5) and in that the second connection and securing means (16) comprise at least one screw (37) which forms a connection with the threaded portion (45).

2. A bodywork component as claimed in claim 1 characterized in that the screw (37) engages with a through hole (36) in the inner wall (17) of the recess (3) and in that stop means (46) cooperate with this screw (37) to prevent its axial displacement with respect to the hole (36).

3. A bodywork component as claimed in claim 1 or 2, characterized in that the stop means (46) are formed by an elastic segment (46).

4. A bodywork component as claimed in any one of the preceding claims, characterized in that the projection (34, 41) is formed essentially by a boss (41) made from an elastically deformable material.

5. A bodywork component as claimed in any one of the preceding claims, characterized in that it is formed by a bumper (1).

6. A bodywork component as claimed in any one of the preceding claims, characterized in that the lighting device (5) is formed by a headlamp.

## Patentansprüche

1. Fahrzeugkarosseriekomponente mit einer Ausnehmung, die eine Beleuchtungseinrichtung und eine Einrichtung zur Befestigung dieser Beleuchtungseinrichtung in der Ausnehmung aufnimmt, welche Befestigungseinrichtung wenigstens ein Scharnier (11) zwischen der Karosseriekomponente (1) und einem Ende (10) der Beleuchtungseinrichtung (5) umfaßt; welches Scharnier (11) die Möglichkeit bietet, die Beleuchtungseinrichtung (5) zwischen einer ersten Position, in der sie in der Ausnehmung (3) liegt, und einer zweiten Position, in der sie aus der Ausnehmung (3) herausgezogen ist, zu drehen; welche Beleuchtungseinrichtung (5) eine erste Verbindungs- und Befestigungseinrichtung (15) umfaßt, die mit einer zweiten Verbindungs- und Befestigungseinrichtung (16) koppelbar ist, die durch die Karosseriekomponente (1) an einem Ende (17) gegenüber dem Ende (10), das mit dem Scharnier (11) verbunden ist, getragen wird; dadurch **gekennzeichnet**, daß die erste Verbindungs- und Befestigungseinrichtung (15) zwei hohle Körper (38,39) umfaßt, die in einer äußeren Wand (14) der Beleuchtungseinrichtung (5) vorgesehen sind, und daß die zweite Einrichtung (16) zwei Vorsprünge (34,35,41) umfaßt, die sich von einer inneren Wand (17) der Ausnehmung (3) erstrecken und vorgesehen sind zum Eingreifen in die jeweiligen hohlen Körper (38,39) zur Definition einer genauen relativen Position der Beleuchtungseinrichtung (5) in bezug auf die Karosseriekomponente (1); welche erste Verbindungs- und Befestigungseinrichtung (15) weiterhin wenigstens einen Gewindebereich (45), der durch die Beleuchtungseinrichtung (5) abgestützt ist, umfaßt, und daß die zweite Verbindungs- und Befestigungseinrichtung (16) wenigstens eine Schraube (37) umfaßt, die eine Verbindung mit dem Gewindebereich (45) bildet.

2. Karosseriekomponente nach Anspruch 1, dadurch **gekennzeichnet**, daß die Schraube (37) in eine Durchgangsbohrung (36) in der inneren Wand (17) der Ausnehmung (3) eingreift und daß eine Anschlageinrichtung (46) mit dieser Schraube (37) zusammenwirkt zur Verhinderung ihrer Axialverschiebung in bezug auf die Bohrung (36).

3. Karosseriekomponente nach Anspruch 1 oder 2, dadurch **gekennzeichnet**, daß der Anschlag (46) durch ein elastisches Segment (46) gebildet ist.

4. Karosseriekomponente nach einem der vorhergehenden Ansprüche. dadurch **gekennzeichnet**, daß der Vorsprung (34,41) im wesentlichen durch einen Ansatz (41) aus einem elastisch verformbaren Material gebildet ist.

5. Karosseriekomponente nach einem der vorhergehenden Ansprüche, dadurch **gekennzeichnet**, daß sie gebildet ist durch eine Stoßstange (1).

6. Karosseriekomponente nach einem der vorhergehenden Ansprüche. dadurch **gekennzeichnet**, daß die Beleuchtungseinrichtung (5) durch einen Frontscheinwerfer gebildet ist.

## Revendications

1. Pièce de carrosserie automobile du type comprenant un renfoncement logeant un dispositif d'éclairage et des moyens pour fixer le dispositif d'éclairage dans le renfoncement, lesdits moyens de fixation comprennent au moins une articulation (11) intercalée entre la pièce (1) de la carrosserie et une extrémité (10) du dispositif d'éclairage (5); l'articulation (11) est adaptée pour permettre au dispositif d'éclairage (5) de tourner entre une première position, dans laquelle il est logé dans le renfoncement (3), et une seconde position, dans laquelle il est extrait du renfoncement (3); ledit dispositif d'éclairage (5) possédant des premiers moyens de connexion et de fixation (15) aptes à être accouplés à des seconds moyens de connexion et de fixation (16) portés par la pièce (1) de la carrosserie, à une extrémité (17) située à l'extrémité opposée (10) raccordée à l'articulation (11); caractérisée en ce que les premiers moyens de connexion et de fixation (15) comprennent deux corps creux (38,39) prévus dans une paroi extérieure (14) du dispositif d'éclairage (5) et en ce que les seconds moyens (16) comprennent deux parties saillantes (34,35;4|) qui s'étendent à partir d'une paroi intérieure (17) du renfoncement (3) et sont adaptées pour s'engager dans des corps creux respectifs (38, 39) pour définir un positionnement relatif précis du dispositif d'éclairage (5) par rapport à la pièce (1) de la carrosserie; les premiers moyens de connexion et de fixation (15) comprennent en outre au moins une partie filetée (45) supportée par le dispositif d'éclairage (5) et en ce que les seconds moyens de connexion et de fixation (16) comprennent au moins une vis (37) qui établit une connexion avec la partie filetée (45).

2. Pièce de carrosserie selon la revendication 1, caractérisé en ce que la vis (37) est engagée dans un trou traversant (36) ménagé dans la paroi intérieure (17) du renfoncement (3) et en ce que des moyens de butée (46) coopèrent avec cette vis (37) pour empêcher son déplacement axial par rapport au trou (36).

3. Pièce de carrosserie selon la revendication 1 ou 2, caractérisé en ce que les moyens de butée (46) sont formés par un segment élastique (46).

4. Pièce de carrosserie selon l'une quelconque des revendications précédentes, caractérisé en ce que la partie saillante (34, 41) est formée essentiellement par un bossage (41) réalisé en un matériau déformable élastiquement.

5. Pièce de carrosserie selon l'une quelconque des revendications précédentes, caractérisé en ce qu'il est formé par un pare-chocs (1).

6. Pièce de carrosserie selon l'une quelconque des revendications précédentes caractérisé en ce que le dispositif d'éclairage (5) est formé par un projecteur.
